# EUROPÄISCHE PATENTANMELDUNG

(11) **EP 1 878 782 A1**
(43) Veröffentlichungstag der Anmeldung: **16.01.2008**
(21) Anmeldenummer: 07013229.5
(22) Anmeldetag: 06.07.2007
(51) Int. Cl.: C10J 3/78, C10J 3/82, C01B 3/16

(54) **Verfahren zur Erzeugung von Wasserstoff mit Hilfe der Wassergas-Shift-Reaktion bei sehr niedrigen Temperaturen**

(30) Priorität: 11.07.2006 DE 102006032104
(71) Anmelder: Linde Aktiengesellschaft, 80807 München (DE)
(72) Erfinder: Bender, Peter, 81825 München (DE); Neuendorf, Stephanie, 82069 Hohenschäftlarn (DE); Schödel, Nicole, Dr., 81477 München (DE); Winkler, Hubertus, Dr., 82491 Grainau (DE)

(57) **Zusammenfassung**

Verfahren zur Umsetzung von kohlenstoffhaltigen Einsatzstoffen in ein wasserstoffreiches Produktgas, wobei aus den kohlenstoffhaltigen Einsatzstoffen in einem ersten Verfahrensschritt (V) ein Wasserstoff (H₂) und Kohlenmonoxid (CO) enthaltendes Syntheserohgas (1) erzeugt wird, von welchem zumindest ein Teil einer katalytisch unterstützten Wasser-Gas-Shiftreaktion (S) zur Erhöhung des Wasserstoffanteils unterzogen wird. Die Wasser-Gas-Shiftreaktion (S) wird bei Temperaturen zwischen 50 und 200°C, bevorzugt aber zwischen 60 und 150°C und Drücken zwischen 1 und 10bar, bevorzugt aber zwischen 1 und 5bar in einem Reaktor (S) durchgeführt, in dem ein geeigneter Katalysator vorliegt.

## Beschreibung

Die Erfindung betrifft ein Verfahren zur Umsetzung von kohlenstoffhaltigen Einsatzstoffen in ein wasserstoffreiches Produktgas, wobei aus den kohlenstoffhaltigen Einsatzstoffen in einem ersten Verfahrensschritt ein Wasserstoff (H₂) und Kohlenmonoxid (CO) enthaltendes Syntheserohgas erzeugt wird, von welchem zumindest ein Teil einer katalytisch unterstützten Wasser-Gas-Shiftreaktion zur Erhöhung des Wasserstoffanteils unterzogen wird.

Zur Erzeugung von Wasserstoff und Wasserstoff enthaltenden Gasgemischen, die bei einer Vielzahl von technischen Anwendungen als Rohstoffe Verwendung finden, ist eine Anzahl von Verfahren bekannt. Bei einem derartigen Verfahren werden kohlenstoffhaltige Einsatzstoffe durch unvollständige Verbrennung (partie Ile Oxidation) umgesetzt, während bei einem anderen Verfahren ein kohlenwasserstoffhaltiger Einsatzstoff gemeinsam mit Wasserdampf bei erhöhter Temperatur in einer katalytisch unterstützten Reaktion umgewandelt wird. Weiterhin bekannt ist beispielsweise auch die Wasserstoffgewinnung durch thermische Zersetzung (Pyrolyse) von Kohlenwasserstoffen. Bei allen diesen Verfahren wird ein Gasgemisch (Syntheserohgas) erzeugt, das neben Wasserstoff auch Kohlenmonoxid, Kohlendioxid, Wasser und nicht umgesetzte Mengen des Einsatzstoffes sowie evtl. auch Stäube und Teere enthält. Sofern bei der Umsetzung des Einsatzstoffes Luft verwendet wurde, enthält das erzeugte Gasgemisch atmosphärischen Stickstoff.

Um die Wasserstoffausbeute bei der Umsetzung von kohlenstoffhaltigen Einsatzstoffen zu erhöhen, wird das Syntheserohgas (oft nach einer Reinigung) einer katalytisch unterstützten Wasser-Gas-Shiftreaktion unterzogen, bei welcher Kohlenmonoxid mit Wasser in Kohlendioxid und Wasserstoff konvertiert wird. Abhängig von der Art des hierbei eingesetzten Katalysators, spricht man von einer Hoch-, Mittel- oder Tieftemperaturkonvertierung.

Durch Hochtemperaturkonvertierung, wie sie aus Gründen der einfachen Ausführung und hohen Katalysatorstabilität häufig angewendet wird, und die bei Temperaturen zwischen 300 und 450°C abläuft, ist es nicht möglich, das Kohlenmonoxid in einem Synthesegas vollständig in Wasserstoff umzusetzen. Bedingt durch das Reaktionsgleichgewicht enthält das Konvertierungsprodukt einen CO-Gehalt von bis zu 2,5%. Um auch das restliche Kohlenmonoxid umzuwandeln, wird oft das Produktgas aus einer Hochtemperaturkonvertierung einer Tieftemperaturkonvertierung, die bei Temperaturen zwischen 180 und 250°C durchgeführt wird, zugeführt. Auf diese Weise ist es zwar möglich, fast das gesamte CO mit Wasser in Wasserstoff umzusetzen, jedoch ist der dafür notwendige technische und finanzielle Aufwand erheblich. Darüber hinaus ist aufgrund des Restgehalts von CO eine Nachreinigung des Wasserstoffs in einer Druckwechselabsorption erforderlich.

Bei der Wasserstoffgewinnung aus Biomasse, wird beispielsweise Holz durch Pyrolyse in ein Synthesegas umgesetzt, das mit Stäuben, Teeren und aromatischen Verbindungen angereichert ist und deswegen erst im Anschluss an eine Gaswäsche einer Wasser-Gas-Shiftreaktion' unterzogen werden kann. Da die Temperatur des Synthesegases bei den üblichen Waschverfahren auf Werte von weniger als 180°C abgesenkt wird, kann es nicht unmittelbar nach einem der Konvertierungsverfahren behandelt werden, wie sie bei der Wasserstoffgewinnung Stand der Technik sind. Vielmehr ist es notwendig die Synthesegastemperatur vor dem Konvertierungsschritt zu erhöhen, wodurch die Wirtschaftlichkeit des Verfahrens beeinträchtigt wird.

Aufgabe der vorliegenden Erfindung ist es daher ein Verfahren anzugeben, mit dem es möglich ist, mit geringem finanziellem und apparativem Aufwand Wasserstoff mit hoher Reinheit aus kohlenwasserstoffhaltigen Einsatzstoffen zu gewinnen.

Die gestellte Aufgabe wird erfindungsgemäß dadurch gelöst, dass die Wasser-Gas-Shiftreaktion bei Temperaturen zwischen 50 und 200°C, bevorzugt aber zwischen 60 und 150°C und Drücken zwischen 1 und 10bar, bevorzugt aber zwischen 1 und 5bar in einem Reaktor (Wasser-Gas-Shiftreaktor) durchgeführt wird, in dem ein geeigneter Katalysator vorliegt.

Da der bei der erfindungsgemäßen Wasser-Gas-Shiftreaktion anfallende Wasserstoff im Wasser-Gas-Shiftreaktor bei niedrigen Drücken zwischen 1 und 10 bar vorliegt, kann das Reaktionsgleichgewicht schon bei niedrigen Temperaturen von 60 bis 150°C zu hohen Wasserstoffausbeuten verschoben werden. Die Temperatur des Syntheserohgases liegt aus diesem Grund bevorzugt zwischen 60 und 150°C.

Ist der Wassergehalt des Syntheserohgases zur Deckung des Wasserbedarf der im Wasser-Gas-Shiftreaktor ablaufenden Wasser-Gas-Shiftreaktion zu gering, so sieht eine Variante des erfindungsgemäßen Verfahrens vor, dass durch Zuführung von Wasser der Wassergehalt des Syntheserohgases vor der Einleitung in den Wasser-Gas-Shiftreaktor auf einen Wert erhöht wird, der hoch genug ist, um den Wasserbedarf der im Wasser-Gas-Shiftreaktor ablaufenden Wasser-Gas-Shiftreaktion zu decken.

Häufig enthalten die Syntheserohgase neben den erwünschten (z. B. H₂, CO) auch unerwünschte Stoffe, wie Teere oder Stäube. Da derartige Stoffe beim Durchströmen von Schüttschichten, wie sie gewöhnlich in einem Wasser-Gas-Shiftreaktor vorliegen, zu Blockierungen führen, sieht eine zweckmäßige Ausgestaltung des erfindungsgemäßen Verfahrens vor, dass dem Wasser-Gas-Shiftreaktor Syntheserohgas zugeführt wird, das frei ist von unerwünschten Stoffen. Zweckmäßiger Weise ist vor dem Wasser-Gas-Shiftreaktor ein Reinigungsschritt vorgesehen, in welchem unerwünschte Stoffe aus dem Syntheserohgas entfernt werden. Bevorzugt wird der Reinigungsschritt mittels einer Wasserwäsche durchgeführt.

Eine bevorzugte Ausgestaltung des erfindungsgemäßen Verfahrens sieht daher vor, dass die kohlenwasserstoffhaltigen Einsatzstoffe bei geringen Drücken von weniger als 12 bar durch Pyrolyse (Niederdruckpyrolyse) in Syntheserohgase umgesetzt werden. Da auf diese Weise erzeugte Syntheserohgase häufig aromatische Verbindungen, Teere und Stäube enthalten, ist es notwendig, das Syntheserohgas vor einer Weiterverarbeitung zu reinigen. Falls die Reinigung in einer Wasserwäsche durchgeführt wird, wird das Syntheserohgas, das mit einer Temperatur von ca. 850°C aus der Pyrolyse austritt, auf Temperaturen zwischen 50 und 200°C abgekühlt und gleichzeitig mit Wasser gesättigt, und kann daher unmittelbar nach der Wasserwäsche und ohne einen weiteren Verfahrensschritt der erfindungsgemäßen Wasser-Gas-Shiftreaktion zugeführt werden.

Eine andere bevorzugte Ausgestaltung des erfindungsgemäßen Verfahrens sieht vor, dass auf biologischen Wegen erzeugte Stoffe, wie beispielsweise Holz oder Stroh als kohlenwasserstoffhaltige Einsatzstoffe verwendet werden.

Eine weiter bevorzugte Ausgestaltung des erfindungsgemäßen Verfahrens sieht vor, dass als Wasser-Gas-Shiftreaktor ein sog. "Supported lonic Liquid Phase" (SILP)-Reaktor verwendet wird, in dem ein geeigneter Katalysator in einer auf einem Substrat immobilisierten ionischen Flüssigkeit vorliegt. Dieses System aus Katalysator, ionischer Flüssigkeit und Trägermaterial liegt als Feststoff vor und kann dem entsprechend als Festbettreaktor ausgestaltet werden. Der Vorteil dieser Ausgestaltung besteht darin, dass auch komplizierte z. B. metallorganische Katalysatorsysteme eingesetzt werden können, die ansonsten nur für homogenkatalytische Anwendungen zugänglich sind. Weitere Vorteile des SILP-Reaktors sind die zumeist hohen erreichbaren Selektivitäten bei gleichzeitig hohen turn-over-Raten, die ein kleineres und kompakteres Reaktordesign ermöglichen.

Für viele Verfahren, wie beispielsweise der Synthese von Kraftstoffen in einer Fischer-Tropsch-Anlage, wird ein Einsatz benötigt, der Wasserstoff und Kohlenmonoxid in einem festen Verhältnis aufweist. Um einen derartigen Einsatz mit dem erfindungsgemäßen Verfahren erzeugen zu können, wird vorgeschlagen, dass ein Teil des Syntheserohgases im Bypass zum Wasser-Gas-Shiftreaktor geleitet und mit dem Produkt aus dem Wasser-Gas-Shiftreaktor zu einem wasserstoffreichen Produktgas zusammengeführt wird, wobei die Größe des Bypass-Stromes so geregelt wird, dass das H₂/CO-Verhältnis im wasserstoffreichen Produktgas einem vorgegeben Wert entspricht.

In den klassischen Pyrolyseverfahren mit anschließender Hoch- und/oder Tieftemperatur-CO-Konvertierung, findet vor der Wasser-Gas-Shiftreaktion eine Verdichtung des Syntheserohgases statt, wobei der Wassergehalt des Syntheserohgases für die Verdichtung allerdings ungünstig ist. Falls das wasserstoffreiche, aus dem erfindungsgemäßen Wasser-Gas-Shiftreaktor austretende Produktgas einen zu geringen Druck für eine weitere Nutzung (beispielsweise in einer Brennstoffzelle) aufweist, sieht eine Variante des erfindungsgemäßen Verfahrens vor, dass das Produktgas in einem Wasserabscheider von Wasser gereinigt und nachfolgend - wesentlich effizienter als das wasserhaltige Gas - verdichtet wird. Zweckmäßiger Weise wird das Wasser im Wasserabscheider durch Temperaturerniedrigung auskondensiert und anschließend aus dem Produktgas entfernt.

Zu den bekannten Verdichtertypen gehören der Hubkolben- und der Schraubenverdichter, welche beide volumetrisch fördernde Verdichter sind. Zu den neueren Entwicklungen gehören die sog. Turboverdichter, wie z. B. Axial- oder Radialverdichter. Alle diese Typen von Verdichtern sind allerdings nur bedingt für die Komprimierung von explosionsfähigen Gemischen, zu denen auch ein wasserstoffreiches Produktgas zählt, geeignet, da durch mechanische Reibung im Kompressionsraum Zündquellen entstehen können. Zum Komprimieren explosionsfähiger Gemische geeignet sind Wasserring-Verdichter, die allerdings wegen ihres komplizierten mechanischen Aufbaus teuer sind

In der Offenlegungsschrift WO2006/034748, deren Offenbarungsgehalt mit der Zitierung vollständig in die Beschreibung aufgenommen wird, sind Verdichter zum Verdichten insbesondere von wasserstoffreichen Gasen beschrieben, die die oben beschriebenen Nachteile nicht aufweisen. Das erfindungsgemäße Verfahren weiterbildend wird vorgeschlagen, dass zur Druckerhöhung des wasserstoffreichen Produktgases ein Verdichter eingesetzt wird, wie er in WO2006/034748 beschrieben ist.

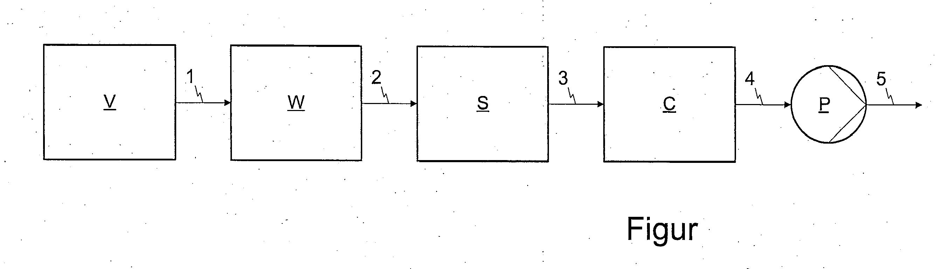

Im Folgenden soll die Erfindung anhand eines in der Figur schematisch dargestellten Ausführungsbeispiels näher erläutert werden.

Bei dem Ausführungsbeispiel handelt es sich um ein Verfahren zur Erzeugung von Wasserstoff aus Holzhackschnitzeln.

Im Biomassevergaser V wird aus den Holzhackschnitzeln durch Pyrolyse bei geringem Druck ein Wasserstoff und Kohlenmonoxid enthaltendes Syntheserohgase erzeugt, das mit einer Temperatur von ca. 850°C über Leitung 1 zur Gaswäsche W geführt wird. In der Gaswäsche, die als Wasserwäsche ausgeführt ist, werden unerwünschte Stoffe, wie aromatische Verbindungen, Teere und Stäube aus dem Syntheserohgas ausgewaschen, wobei die Gastemperatur auf ca. 100°C abgesenkt und das Syntheserohgas mit Wasser gesättigt wird. Aus der Wasserwäsche W wird das gereinigte Syntheserohgas zur Durchführung einer Wasser-Gas-Shiftreaktion über Leitung 2 in den SILP-Reaktor S geführt, der einen geeigneten Katalysator enthält und in dem das im Syntheserohgas vorliegende Kohlenmonoxid katalytisch unterstützt mit Wasser bis auf wenige ppm in Wasserstoff und Kohlendioxid umgewandelt wird. Über Leitung 3 wird das Produktgas, das neben Wasserstoff noch weitere Komponenten, wie Kohlendioxid und Wasser enthält, aus dem SILP-Reaktor abgezogen und dem Wasserabscheider C zugeführt, in dem Wasser auskondensiert und aus dem Produktgas entfernt wird. Über Leitung 4 wird ein nahezu vollständig aus Wasserstoff und Kohlendioxid bestehendes Gasgemisch abgezogen und dem Verdichter P zugeleitet, aus dem das Gasgemisch mit erhöhtem Druck über Leitung 5 abströmt und einer Weiterverarbeitung (nicht dargestellt) zugeleitet wird.

## Patentansprüche

1. Verfahren zur Umsetzung von kohlenstoffhaltigen Einsatzstoffen in ein wasserstoffreiches Produktgas, wobei aus den kohlenstoffhaltigen Einsatzstoffen in einem ersten Verfahrensschritt ein Wasserstoff (H₂) und Kohlenmonoxid (CO) enthaltendes Syntheserohgas erzeugt wird, von welchem zumindest ein Teil einer katalytisch unterstützten Wasser-Gas-Shiftreaktion zur Erhöhung des Wasserstoffanteils unterzogen wird, **dadurch gekennzeichnet, dass** die Wasser-Gas-Shiftreaktion bei Temperaturen zwischen 50 und 200°C, bevorzugt aber zwischen 60 und 150°C und Drücken zwischen 1 und 10 bar, bevorzugt aber zwischen 1 und 5 bar in einem Reaktor durchgeführt wird, in dem ein geeigneter Katalysator vorliegt.

2. Verfahren nach Anspruch 1, **dadurch gekennzeichnet, dass** die kohlenwasserstoffhaltigen.Einsatzstoffe bei geringen Drücken von weniger als 12 bar durch Pyrolyse (Niederdruckpyrolyse) in Syntheserohgase umgesetzt werden.

3. Verfahren nach einem der Ansprüche 1 oder 2, **dadurch gekennzeichnet, dass** das Syntheserohgas vor der Einleitung in den Wasser-Gas-Shiftreaktor einer Gaswäsche mit Wasser unterzogen wird.

4. Verfahren nach einem der Ansprüche 1 bis 3, **dadurch gekennzeichnet, dass** das es sich bei den kohlenstoffhaltigen Einsatzstoffen um auf biologischen Wegen erzeugte Stoffe handelt.

5. Verfahren nach einem der Ansprüche 1 bis 4, **dadurch gekennzeichnet, dass** als Wasser-Gas-Shiftreaktor ein sog. "Supported lonic Liquid Phase" (SILP)-Reaktor verwendet wird, in dem ein geeigneter Katalysator in einer auf einem Substrat immobilisierten ionischen Flüssigkeit vorliegt.

6. Verfahren nach einem der Ansprüche 1 bis 5, **dadurch gekennzeichnet, dass** ein Teil des Syntheserohgases im Bypass zum Wasser-Gas-Shiftreaktor geleitet und mit dem Produkt aus dem Wasser-Gas-Shiftreaktor zu einem wasserstoffreichen Produktgas zusammengeführt wird, wobei die Größe des Bypass-Stromes so geregelt wird, dass das H₂/CO-Verhältnis im wasserstoffreichen Produktgas einem vorgegeben Wert entspricht.
